# EUROPEAN PATENT APPLICATION

(11) **EP 4 318 737 A1**
(43) Date of publication of application: **07.02.2024**
(21) Application number: 23749927.2
(22) Date of filing: 27.01.2023
(51) Int. Cl.: H01M 10/654, H01M 10/6553, H01M 10/613, H01M 10/058, H01M 10/052

(54) **LITHIUM SECONDARY BATTERY HAVING FIRE-SUPPRESSION STRUCTURE**

(30) Priority: 07.02.2022 KR 20220015670
(71) Applicant: LG ENERGY SOLUTION, LTD., Seoul 07335 (KR)
(72) Inventor: CHOI, Soon Hyung, Daejeon 34122 (KR)
(74) Representative: Plasseraud IP
(86) International application number: PCT/KR2023/001240
(87) International publication number: WO 2023/149694

(57) **Abstract**

Disclosed herein relates to a lithium secondary battery with an ignition suppression structure. More specifically, the present invention is characterized by providing a lithium secondary battery having a structure capable of suppressing an ignition phenomenon.

## Description

### [Technical Field]

The present invention relates to a lithium secondary battery with an ignition suppression structure.

This application claims the benefit of priority based on Korean Patent Application No. 10-2022-0015670 filed on February 07, 2022, and all contents disclosed in the literature of the Korean Patent Application are included as part of this specification.

### [Background Technology of the Invention]

A lithium secondary battery is typically composed of a battery cell including a positive electrode, a negative electrode, an electrolyte, and a separator. In the case of a pouch cell, which is a type of a battery cell, it has a form in which an electrode assembly in which a plurality of unit cells composed of a positive electrode, a negative electrode, and a separator is stacked is accommodated in a pouch-shaped battery case together with an electrolyte.

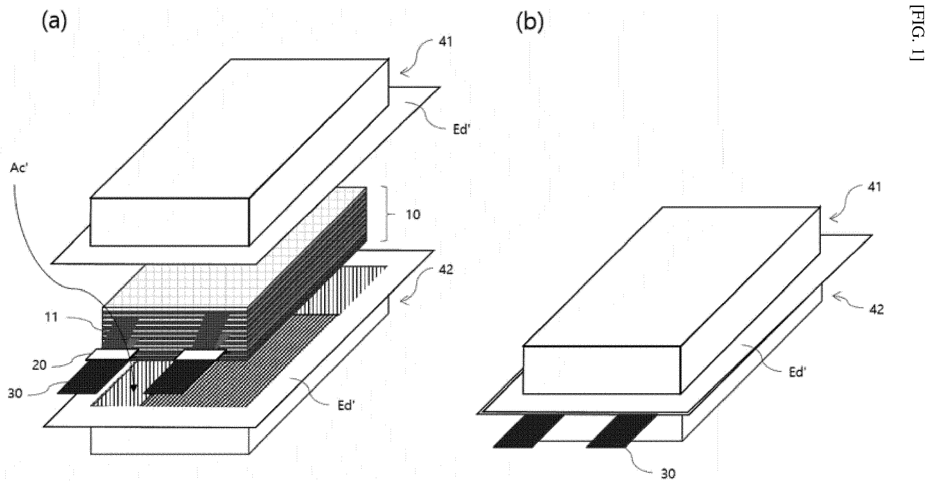

FIG. 1 shows a conventional pouch cell structure. Referring to FIG. 1(a), the lithium secondary battery includes an electrode lead 30, an insulating film 20, an electrode assembly 10, and a battery case 40. The battery case 40 includes an accommodating part Ac' in which the electrode assembly 10 is accommodated and an edge part Ed' extending in the longitudinal direction of the battery case 40 along the rim of the accommodating part Ac'.

The pouch cell has a form in which the electrode assembly 10 is accommodated in a pouch-shaped battery case 40. The electrode assembly 10 refers to a stack of a plurality of electrode plates, and the electrode plate is composed of a negative electrode plate and a positive electrode plate. That is, the electrode assembly 10 accommodated in the pouch-shaped battery case 40 means that positive electrode plates and negative electrode plates are alternately stacked. Here, the positive plate and the negative plate are separated by a separator. Electrode tabs 11 are extended or connected to these electrode plates according to their respective polarities. The electrode lead 30 is connected to these electrode tabs 11. The electrode tab 11 and the electrode lead 30 are joined by ultrasonic welding or the like.

The insulating film 20 is attached on the electrode lead 30 to seal and insulate the electrode lead 30 and the battery case 40, and when the joining part of the upper battery case 41 and the lower battery case 42 is joined and sealed, it is interposed between the joining parts of the upper battery case 41 and the lower battery case 42.

Referring to FIG. 1(b), when the upper battery case 41 and the lower battery case 42 are joined, it can be known that the electrode lead 30 connected to the electrode tab 11 is protruded outside the battery case 40. That is, the upper battery case 41 and the lower battery case 42 protect the electrode assembly 10 from the outside by sealing it.

Meanwhile, as the battery case 40 acts as an insulator, heat generated from the electrode assembly 10 inside may not be released to the outside, which causes the lithium secondary battery to ignite due to overheating. Specifically, as the heat generated in each unit cell overlaps, the temperature inside the battery cell rises, resulting in overheating of the inside of the battery cell.

In general, since a lithium secondary battery includes a plurality of electrode plates by stacking them, heat is collected in the center of the electrode assembly 10, and the temperature of the center increases exponentially. As described above, when the inside of the lithium secondary battery reaches a high temperature, thermal runaway occurs at the positive electrode, and there is a risk of the lithium secondary battery exploding due to the heat generated at this time.

Because the recent trend is to increase the energy density of the lithium secondary battery, there is a need for a method capable of suppressing the overheating phenomenon according to the overlap of heat generated in the unit cell as described above.

### [Related Art]

Korean Patent Publication No. 10-2019-0024709

### [Description of the Invention]

### [Technical Problem]

The present invention is directed to solve an overheating phenomenon caused by overlapping heat generated from a plurality of unit cells.

### [Technical Solution]

According to the present invention, a lithium secondary battery with ignition suppression structure including: an electrode assembly composed of a first electrode part including a unit cell, a second electrode part including a unit cell, and a heat dissipation part comprising a heat dissipation member; and a battery case composed of an upper battery case and a lower battery case, and including an accommodating part accommodating the electrode assembly and a joining part formed by extending along an edge of the accommodating part; wherein the heat dissipation part is interposed between the first electrode part and the second electrode part is provided.

Specifically, the first electrode part and the second electrode part may each include at least one or more unit cells.

More specifically, the number of unit cells included in the first electrode part and the second electrode part may be equal to each other.

Specifically, a separator may be interposed between the heat dissipation part and the first electrode part and between the heat dissipation part and the second electrode part.

In addition, the heat dissipation part may include a plurality of heat dissipation members, and a separator may be interposed between each of the heat dissipation members.

Preferably, the heat dissipation member may include at least one among copper, aluminum, nickel, copper alloy, nickel alloy, titanium, stainless steel (SUS), and carbon.

Specifically, the unit cell may include: a positive electrode plate including a positive electrode current collector, a positive electrode tab drawn out from one end of the positive electrode current collector, and a positive electrode mixture coated on a surface of the positive electrode current collector; a negative electrode plate including a negative electrode current collector, a negative electrode tab drawn out from one end of the negative electrode current collector, and a negative electrode mixture coated on a surface of the negative electrode current collector; and a separator interposed between the positive electrode plate and the negative electrode plate.

Specifically, the heat dissipation member may have a plate shape, and the horizontal and vertical length of the heat dissipation member may not exceed the horizontal and vertical length of the positive electrode current collector or the negative electrode current collector. In addition, the heat dissipation member may further include a heat dissipation tab drawn out at a position corresponding to any one among the positive electrode tab and the negative electrode tab.

In addition, the total thickness of the heat dissipation members included in the heat dissipation part may be thicker than the thickness of the positive electrode current collector or the negative electrode current collector.

Additionally, the total thickness of the heat dissipation members included in the heat dissipation part may be less than or equal to 8 times the thickness of the positive electrode current collector.

Meanwhile, the positive electrode tab may be connected to a heat dissipation tab in a position corresponding to the positive electrode tab,
the negative electrode tab may be connected to a heat dissipation tab in a position corresponding to the negative electrode tab.

According to another exemplary embodiment, the heat dissipation member may further include a heat dissipation fin drawn out from one end where the positive electrode tab and the negative electrode tab are not positioned.

Specifically, the heat dissipation fin may not exceed the joining part of the battery case, and may be interposed between the joining parts of the upper battery case and the lower battery case.

### [Advantageous Effects]

According to the present invention, even when high-temperature heat is partially generated from the electrode assembly inside the battery cell, it has an effect of suppressing overheating and ignition of the lithium secondary battery.

### [Brief description of the drawings]

FIG. 1 shows a conventional pouch cell structure.
FIG. 2 shows a configuration of a lithium secondary battery according to the first embodiment of the present invention.
FIG. 3 shows a configuration of a unit cell of the present invention.
FIG. 4 shows an example of a configuration of a heat dissipation part of the present invention.
FIG. 5 shows a configuration of an electrode assembly of a lithium secondary battery according to the second embodiment of the present invention.
FIG. 6 shows a configuration of a heat dissipation part of a lithium secondary battery according to the third embodiment of the present invention.
FIG. 7 shows a configuration of a lithium secondary battery according to the third embodiment of the present invention.
FIG. 8 is a partial cross-sectional view of a lithium secondary battery according to the third embodiment of the present invention.
FIG. 9 shows a configuration of an electrode assembly stack of Examples 1 to 3 of the present invention.
FIG. 10 shows a configuration of an electrode assembly stack of Comparative Example 1 and Comparative Example 2 of the present invention.

### [Best Mode for Carrying Out the invention]

Hereinafter, the detailed configuration of the present invention will be described in detail with reference to the accompanying drawings and various embodiments. The exemplary embodiments described below are illustratively to help understanding of the present invention, and the accompanying drawings are not drawn to scale and the dimensions of some components may be exaggerated to help understanding of the present invention.

Since the present invention may have various changes and various forms, specific exemplary embodiments are illustrated in the drawings and described in detail in the text. However, it should be understood that this is not intended to limit the present invention to a specific disclosed form, and includes all modifications, equivalents, and substitutes included in the spirit and scope of the present invention.

The lithium secondary battery of the present invention includes an electrode assembly including a plurality of unit cells and a battery case accommodating the electrode assembly.

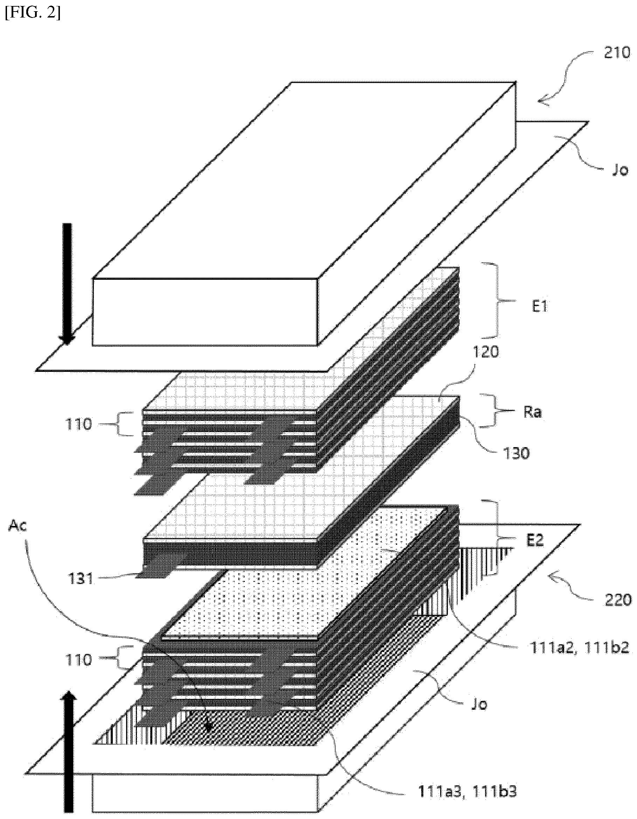

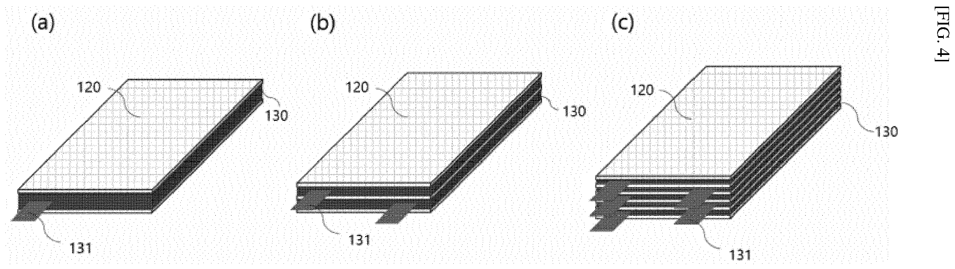

FIG. 2 to FIG. 3 show a structure of a lithium secondary battery according to the first embodiment of the present invention, and FIG. 4 to FIG. 5 show a structure of a lithium secondary battery according to the second embodiment of the present invention.

Hereinafter, the present invention will be described with reference to the drawings.

### (First Embodiment)

FIG. 2 shows a configuration of a lithium secondary battery according to the first embodiment of the present invention.

Referring to FIG. 2, it can be seen that a battery case includes an accommodating part capable of accommodating an electrode assembly 100, and has a structure capable of sealing the electrode assembly 100 by inserting it into the accommodating part. More specifically, the battery case includes an upper battery case 210 covering the upper part of the electrode assembly 100 and a lower battery case 220 covering the lower part of the electrode assembly 100.

At least one among the upper battery case 210 and the lower battery case 220 may include an accommodating part capable of completely accommodating the electrode assembly 100.

The upper battery case 210 and the lower battery case 220 may be manufactured integrally or separately. This can be sufficiently adjusted according to the intention of the manufacture.

In the present invention, an example in which each of the upper battery case 210 and the lower battery case 220 includes an accommodating part has been given.

The electrode assembly 100 includes a first electrode part including a plurality of unit cells 110, a second electrode part including a plurality of unit cells 110, and a heat dissipation part including the heat dissipation member 130 interposed between the first and second electrode parts.

Referring to FIG. 2, it can be seen that the first electrode part located above the heat dissipation part includes a plurality of unit cells 110 by stacking them, and the second electrode part located below the heat dissipation part also includes a plurality of unit cells 110 by stacking them.

The first electrode part and the second electrode part should each include at least one or more unit cells 110, and preferably, the number of unit cells 110 included in the first electrode part and the second electrode part should be identical to each other.

That is, a structure in which the first electrode part and the second electrode part are symmetrical with respect to the heat dissipation part can be formed. As the first electrode part and the second electrode part have a symmetrical structure, the heat dissipation part may be located closer to the center in the thickness direction within the electrode assembly 100, and the heat dissipation part located in the center of the electrode assembly 100 may uniformly absorb the heat generated from the first electrode part positioned above and the second electrode part positioned below, which may allow discharge to the outside to be smooth. If the number of unit cells 110 included in the first electrode part and the second electrode part is greatly different, so that the first electrode part and the second electrode part do not have a symmetrical structure with the heat dissipation part interposed therebetween, heat generated from each electrode part is concentrated to one side, so that the heat dissipation part cannot properly absorb the heat.

The first electrode part, the heat dissipation part, and the second electrode part are sequentially stacked to form one electrode assembly 100, and at this time, it is preferable that each component is electrically separated by a separator 120 or the like. Specifically, a separator 120 is preferably interposed between the first electrode part and the heat dissipation part. In addition, a separator 120 is also preferably interposed between the second electrode part and the heat dissipation part.

The unit cell 110 included in the first electrode part and the second electrode part includes a positive electrode plate 111a, a negative electrode plate 111b, and a separator 112.

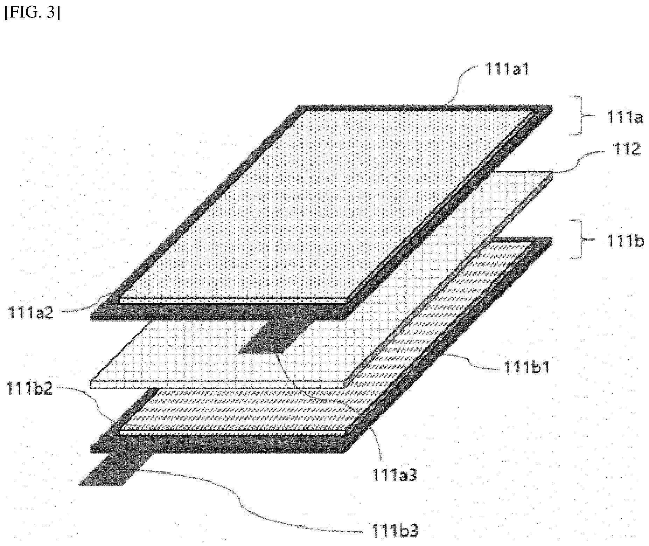

FIG. 3 shows a configuration of a unit cell 110 of the present invention.

Referring to FIG. 3, the unit cell 110 is largely composed of an electrode plate and a separator 112.

The electrode plate includes an electrode current collector, an electrode mixture coated on the electrode current collector, and an electrode tab drawn from one end of the electrode current collector.

The electrode plate, the electrode current collector, the electrode tab, and the electrode mixture may be classified into two types according to polarity. Specifically, the electrode mixture is composed of a positive electrode mixture 111a2 including a positive electrode active material and a negative electrode mixture 111b2 including a negative electrode active material, and the electrode current collector is composed of a positive electrode current collector 111a1 and a negative electrode current collector 111b1 symmetrical to the positive electrode current collector 111a1 based on a separator 112. Moreover, the electrode tab is composed of a positive electrode tab 111a3 drawn from the positive current collector 111a1 and a negative electrode tab 111b3 drawn from the negative current collector 11 1b1.

The electrode plate includes: a positive electrode plate 111a including a positive electrode current collector 111a1, a positive electrode tab 111a3 drawn from one end of the positive electrode current collector 111a1, and a positive electrode mixture 111a2 coated on a surface of the positive electrode current collector 111a1, and a negative electrode plate 111b including a negative electrode current collector 111b1, a negative electrode tab 111b3 drawn from one end of the negative electrode current collector 111b1, and a negative electrode mixture 111b2 coated on the surface of the negative electrode current collector 111b1.

The positive electrode plate 111a and the negative electrode plate 111b may have a difference in thickness depending on the required capacity of the lithium secondary battery, but each positive electrode plate 111a and negative electrode plate 111b used in one lithium secondary battery may preferably have the same thickness. Furthermore, the positive electrode current collector 111a1 included in the positive electrode plate 111a and the negative electrode current collector 111b1 included in the negative electrode plate 111b may have the same thickness.

The positive electrode mixture 111a2 may be coated on one side or both sides of the positive electrode current collector 111a1, and the present invention will not specifically limit this.

The positive electrode mixture 111a2 may preferably include a positive electrode active material, a conductor, a binder, etc., and the positive electrode mixture 111a2 may use any positive electrode material commonly used in the field of lithium secondary battery technology.

The positive electrode current collector 111a1 provides a path for electrons to move, emits internally generated heat to the outside, and serves as a support for maintaining the shape of the electrode.

As the positive electrode current collector 111a1, any positive electrode current collector 111a1 material generally used in the field of lithium secondary battery technology may be used. For example, the positive electrode current collector 111a1 may include aluminum.

The thickness of the positive electrode current collector 111a1 is preferably 1µm to 20µm.

It is preferable that the positive electrode mixture 111a2 is not coated on the positive electrode tab 111a3 drawn from one end of the positive electrode current collector 111a1.

The negative electrode mixture 111b2 may be coated on one side or both sides of the negative electrode current collector 111b1, and the present invention will not specifically limit this.

The negative electrode mixture 111b2 may preferably include a negative electrode active material, a conductor, a binder, etc., and the negative electrode mixture 111b2 may use any negative electrode material commonly used in the field of lithium secondary battery technology.

The negative electrode current collector 111b1 provides a path for electrons to move, emits internally generated heat to the outside, and serves as a support for maintaining the shape of the electrode.

As the negative electrode current collector 111b1, any material for the anode current collector 111b1 generally used in the field of lithium secondary battery technology may be used. For example, the negative electrode current collector 111b1 may include copper.

The thickness of the anode current collector 11 1b1 is preferably 1µm to 20µm.

It is preferable that the negative electrode mixture 111b2 is not coated on the negative electrode tab 111b3 drawn from one end of the negative electrode current collector 111bl.

In the present invention, the positive electrode tab 111a3 and the negative electrode tab 111b3 should avoid overlapping each other in the vertical direction. This is to bind the positive electrode tabs 111a3 to each other and the negative electrode tabs 111b3 to each other so that they are separately coupled to the positive and negative leads, respectively.

The positive electrode tab 111a3 and the negative electrode tab 111b3 may be formed and positioned in the same direction in the electrode assembly 100, or may be formed and positioned in opposite directions to each other, but there is no need to specifically limit this. In the present invention, for the convenience of understanding, it is assumed that the positive electrode tab 111a3 and the negative electrode tab 111b3 are formed to face the same direction in the electrode assembly 100.

As the separators 112, 120 of the present invention, any separators 112, 120 used in the field of lithium secondary battery technology may be used, and the present invention is not particularly limited thereto.

The electrode assembly 100 of the present invention is characterized by having a structure capable of releasing heat generated inside to the outside through a heat dissipation part.

Referring to FIG. 4(a), it can be seen that the heat dissipation part includes a plate-shaped heat dissipation member 130.

The heat dissipation member 130 is a material capable of absorbing heat well and plays a role in absorbing heat generated in the electrode assembly 100 sealed by a battery case and releasing the absorbed heat smoothly to the outside.

The heat dissipation member 130 preferably includes at least one among copper, aluminum, nickel, copper alloy, nickel alloy, titanium, stainless steel (SUS), and carbon.

It is preferable that the horizontal and vertical lengths of the heat dissipation member 130 do not exceed the horizontal and vertical lengths of the positive current collector 111a1 and the negative current collector 111b1 included in the first electrode part and the second electrode part, and more preferably, the horizontal and vertical lengths of the heat dissipation member 130 may be equal to the horizontal and vertical lengths of the positive current collector 111a1 and the negative current collector 111b1.

The one heat dissipation member 130 may preferably further include a heat dissipation tab 131 drawn out at a position corresponding to one among the positive electrode tab 111a3 and the negative electrode tab 111b3.

The heat dissipation tab 131 is coupled to the positive electrode tab 111a3 or the negative electrode tab 111b3 to release heat absorbed by the heat dissipation member 130 to the outside.

The thickness of the heat dissipation member 130 is preferably thicker than the thickness of the positive electrode current collector 111a1 in order to absorb more heat generated in the electrode assembly 100. If the thickness of the heat dissipation member 130 is not thick enough, sufficient heat may not be absorbed or stored therein. Here, the positive current collector 111a1 is applied based on the thickness of the heat dissipation member 130 because relatively more heat is generated in the positive electrode plate 111a than in the negative electrode plate 111b in the unit cell 110.

### (Second Embodiment)

In the lithium secondary battery of the present invention, the heat dissipation part may include a plurality of heat dissipation members 130.

FIG. 4 shows an example of a configuration of a heat dissipation part of the present invention.

FIG. 4(a) shows the heat dissipation part of the lithium secondary battery according to the first embodiment described above, and it can be seen that a single heat dissipation member 130 is used in the heat dissipation part. Here, a separator 120 is provided on both sides of the heat dissipation member 130.

Referring to FIG. 4(b), it can be seen that the heat dissipation part includes two stacked heat dissipation members 130. It can be seen that a separator 120 is provided between the heat dissipation members 130 and on the outer surface of the heat dissipation member 130. In addition, it can be seen that the heat dissipation tab 131 is drawn from each heat dissipation member 130 at different positions. Here, a single heat dissipation tab 131 is connected to the negative electrode tab 111b3, and the remaining single heat dissipation tab 131 is connected to the positive electrode tab 111a3.

Referring to FIG. 4(c), it can be seen that a plurality of heat dissipation members 130 are stacked in the heat dissipation part. Separators 120 are interposed between the respective heat dissipation members 130 to electrically separate the respective heat dissipation members 130. Here, the number of heat dissipation tabs 131 may be formed in plurality as many as the number of the heat dissipation members 130, and the heat dissipation tabs 131 are divided into two positions corresponding to the positive electrode tab 111a3 and the negative electrode tab 111b3, and is drawn out from the heat dissipation member 130.

As described above, the heat dissipation members 130 included in the heat dissipation part may exist in plurality, but the total thickness of the heat dissipation members 130 included in the heat dissipation part should not exceed 8 times the thickness of the positive electrode current collector 111a1. Preferably, the total thickness of the heat dissipation members 130 included in the heat dissipation part is 2 to 8 times the thickness of the positive electrode current collector 111a1. Here, when the total thickness of the heat dissipation member 130 is less than twice the thickness of the positive electrode current collector 111a1, it may be difficult to sufficiently absorb heat generated from the positive electrode plate 111a. In addition, when the total thickness of the heat dissipation member 130 exceeds 8 times the thickness of the positive electrode current collector 111a1, there may be a problem in that the energy density of the lithium secondary battery is reduced.

In addition, it is preferable that the total thickness of the heat dissipation members 130 included in the heat dissipation part is less than or equal to 40% of the total thickness of the positive electrode current collector 111a1 and the negative electrode current collector 111b1 included in the first electrode part and the second electrode part. More preferably, the total thickness of the heat dissipation members 130 included in the heat dissipation part is 10% to 40% of the total thickness of the positive electrode current collector 111a1 and the negative electrode current collector 111b1 included in the first electrode part and the second electrode part. Here, if the total thickness of the heat dissipation member 130 is less than 10%, the heat absorption effect by the heat dissipation member 130 cannot be properly obtained. In addition, if it exceeds 40%, there is a concern that the energy density of the lithium secondary battery may be lowered due to the excessive volume of the heat dissipation member 130.

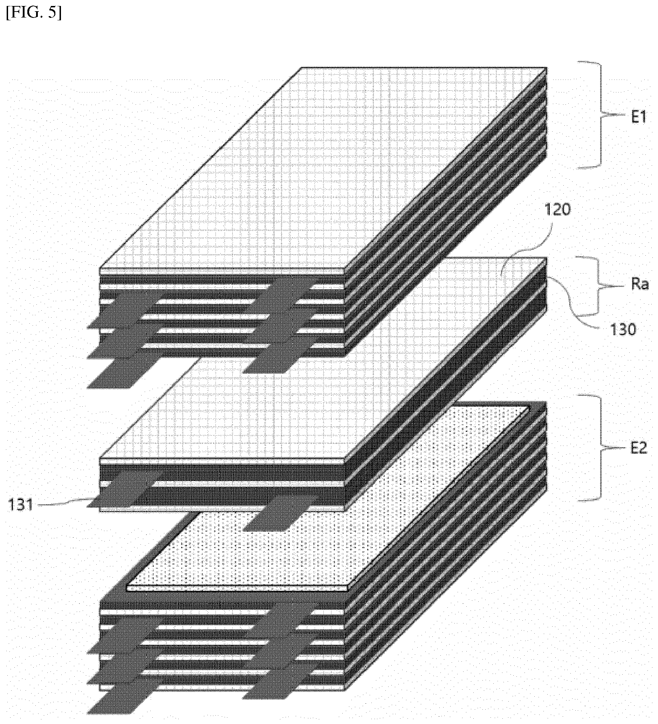

FIG. 5 shows a configuration of an electrode assembly 100 of a lithium secondary battery according to the second embodiment of the present invention.

Referring to FIG. 5, it can be seen that the heat dissipation part includes two heat dissipation members 130. Specifically, a separator 120 is interposed between the two heat dissipation members 130, and separators 120 are attached on one side facing the outside in each of the heat dissipation members 130, respectively.

As described above, the heat dissipation part of the present invention may include two heat dissipation members 130, but the total sum of the thicknesses of the two heat dissipation members 130 should not exceed 8 times the thickness of the positive electrode current collector 111a1. Preferably, the total thickness of the two heat dissipation members 130 included in the heat dissipation part is 2 to 8 times the thickness of the positive electrode current collector 111a1. More preferably, it is 3 to 6 times the thickness of the positive electrode current collector 111a1.

In addition, it is preferable that the total thickness of the two heat dissipation members 130 included in the heat dissipation part is less than or equal to 40% of the total thickness of the positive electrode current collector 111a1 and the negative electrode current collector 111b1 included in the first electrode part and the second electrode part. More preferably, the total thickness of the heat dissipation members 130 included in the heat dissipation part is 10% to 40% of the total thickness of the positive electrode current collector 111a1 and the negative electrode current collector 111b1 included in the first electrode part and the second electrode part.

That is, in the present invention, the number of heat dissipation members 130 included in the heat dissipation part does not need to be limited, but it is preferable that the entire thickness range of the heat dissipation member 130 is limited by the thickness of the positive electrode current collector 111a1, or the total thickness of the positive electrode current collector 111a1 and the negative electrode current collector 111b1.

### (Third Embodiment)

The heat dissipation member 130 of the present invention may further include a heat dissipation fin 132 having a function of releasing heat generated from the heat dissipation member 130 to the outside.

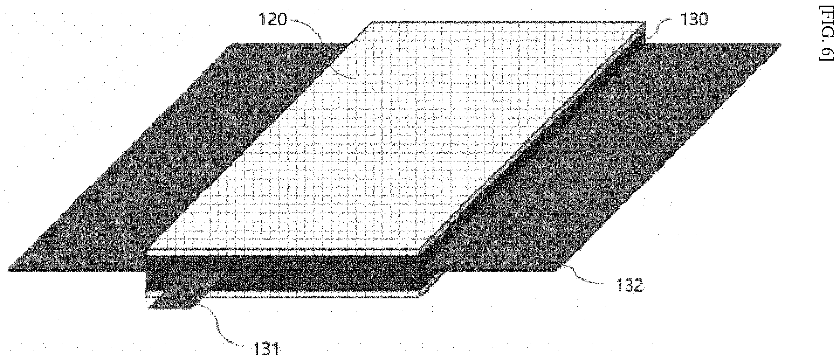

FIG. 6 shows a configuration of a heat dissipation part of a lithium secondary battery according to the third embodiment of the present invention.

Referring to FIG. 6, it can be seen that the heat dissipation fin 132 is drawn out and formed at one end of the heat dissipation member 130. The heat dissipation fin 132 may be formed to extend along the side of the heat dissipation member 130 as shown in order to more smoothly release heat to the outside, but is not limited thereto. However, when the heat dissipation fin 132 is formed by extending along the side of the heat dissipation member 130, there is a risk of the positive electrode tab 111a3 and the negative electrode tab 111b3 included in the unit cell 110 being electrically connected to each other by the heat dissipation fin 132. Therefore, it is preferable that the heat dissipation fin 132 is formed by being drawn out from one end of the heat dissipation member 130 where the positive electrode tab 111a3 and the negative electrode tab 111b3 are not located. If the heat dissipation tab 131 is present in the heat dissipation member 130, it is preferable that the heat dissipation fin 132 is drawn out from the other end where the heat dissipation tab 131 is not located.

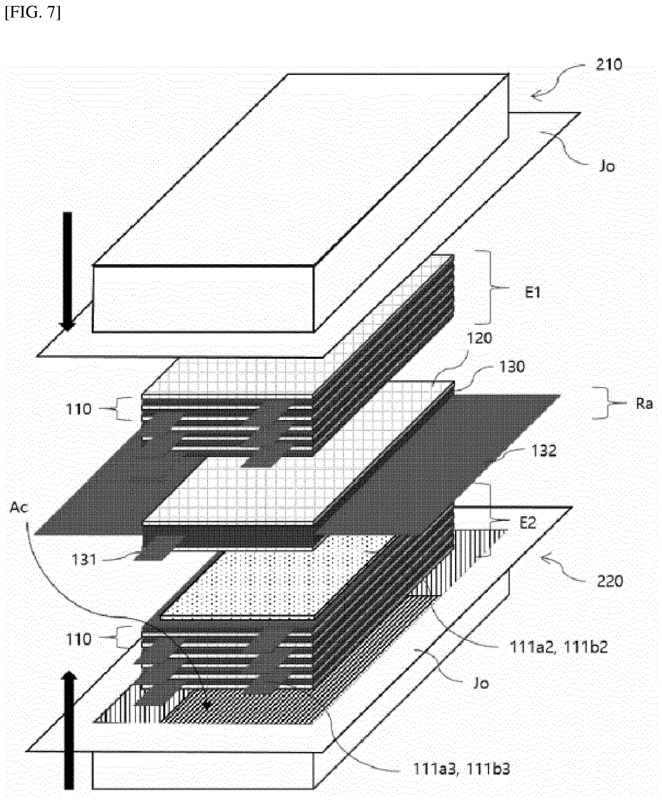

FIG. 7 shows a configuration of a lithium secondary battery according to the third embodiment of the present invention.

Referring to FIG. 7, it can be seen that the heat dissipation fin 132 is formed by extending from the end of the other side among the sides of the heat dissipation material where the heat dissipation tab 131 is not located.

Since the heat dissipation fin 132 as described above is drawn out from the heat dissipation member 130 in a wider range than the heat dissipation tab 131, it is possible to smoothly release the heat absorbed by the heat dissipation member 130 to the outside.

It is preferable that the heat dissipation fin 132 is interposed between the upper battery case 210 and the lower battery case 220 when the electrode assembly 100 is accommodated in the upper battery case 210 and the lower battery case 220, and when the upper battery case 210 and the lower battery case 220 are joined to each other. This is because the heat dissipation fin 132 is effective in releasing heat to the outside through the joining part of the battery case.

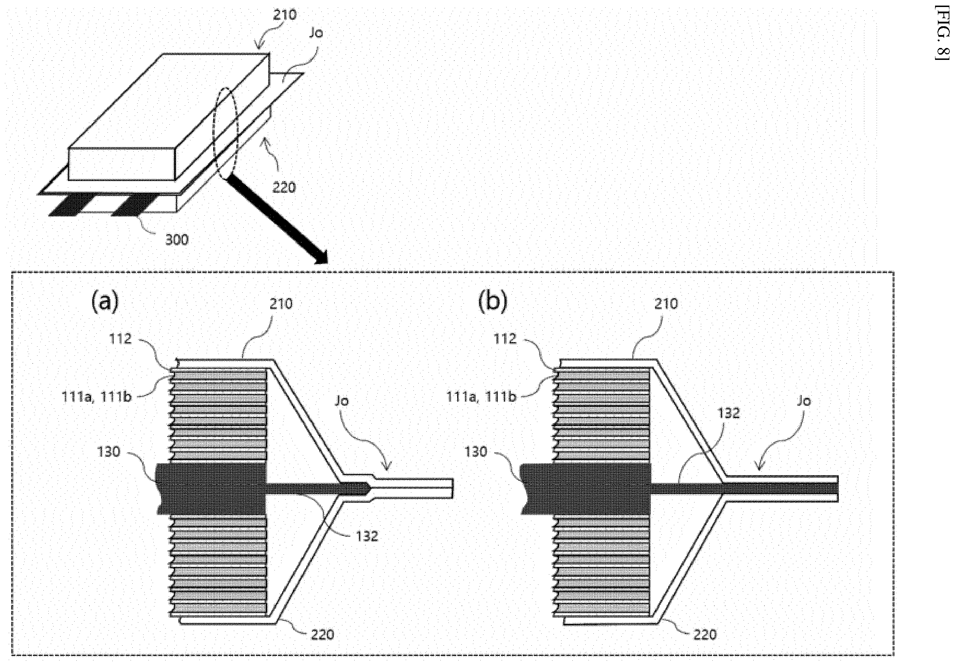

FIG. 8 shows a partial cross-sectional view of a lithium secondary battery according to the third embodiment of the present invention.

Referring to FIG. 8(a), it can be seen that the heat dissipation fin 132 is interposed between the joining parts of the upper battery case 210 and the lower battery case 220.

Referring to FIG. 8(b), it can be seen that the heat dissipation fin 132 is interposed between the joining parts of the upper battery case 210 and the lower battery case 220, and the end of the heat dissipation fin 132 is open to the outside. In the structure shown in FIG. 8(b), heat dissipation can proceed more effectively through the end of the heat dissipation fin 132.

### [Mode for Carrying Out the Invention]

### Example 1

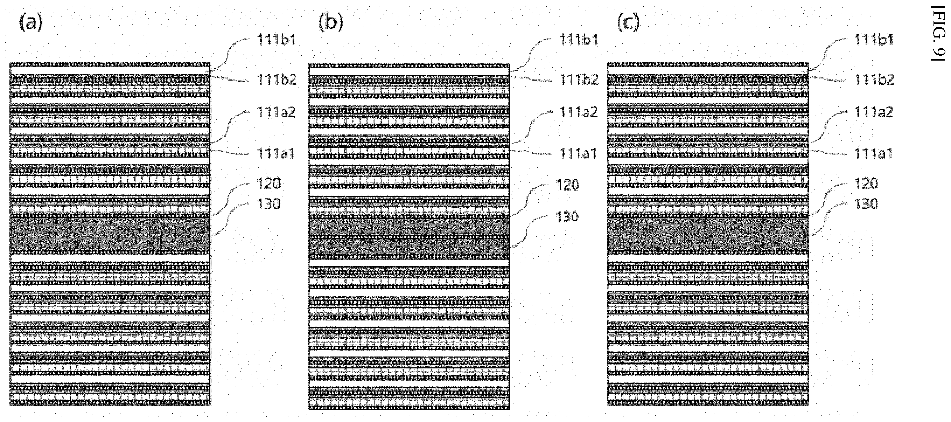

A negative electrode current collector (copper foil) having a thickness of 15µm coated with a negative electrode mixture including a negative electrode active material (graphite) and a binder (polyvinylidene fluoride), a positive electrode current collector (aluminum foil) having a thickness of 15µm coated with a cathode mixture including a positive electrode active material (LiCoO₂), a conductor (carbon black), and a binder (polyvinylidene fluoride) and a separator (porous polyethylene film) was prepared, and a heat dissipation member (aluminum) having a thickness of 60µm was prepared and laminated in the structure shown in FIG. 9 (a) to prepare an electrode assembly.

Thereafter, by coupling a heat dissipation tab to a positive electrode tab, a lithium secondary battery was prepared by covering a battery case as shown in FIG. 1.

### Example 2

Two heat dissipation members (aluminum) having a thickness of 30µm were laminated in the structure shown in FIG. 9(b), and a lithium secondary battery was prepared under the same conditions as in Example 1.

### Example 3

A lithium secondary battery was prepared in the same manner as in Example 1, except that the heat dissipation fin having a structure of FIG. 6 was interposed between the joining parts of the upper battery case and the lower battery case as shown in FIG. 8(b).

### Comparative Example 1

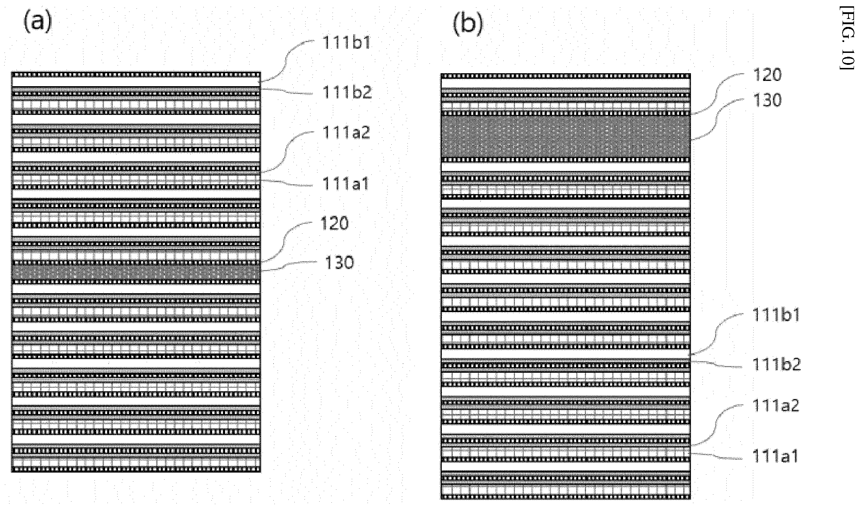

A heat dissipation member (aluminum) having a thickness of 15µm was laminated in the structure shown in FIG. 10(a), and a lithium secondary battery was prepared under the same conditions as in Example 1.

### Comparative Example 2

A heat dissipation member (aluminum) having a thickness of 60µm was laminated in the structure shown in FIG. 10(b), and a lithium secondary battery was prepared under the same conditions as in Example 1.

Experimental Example (battery heat generation evaluation during charging and discharging)

In order to evaluate the performance of the secondary battery according to the present invention, the following experiment was performed.

Overcharging was performed on the secondary batteries prepared in Examples and Comparative Examples, and the surface temperature of the overcharged secondary batteries was measured. Specifically, after charging to 4.2V, the charged batteries were overcharged with a constant current of 1A until it reached 8.4V. The surface of each secondary battery was photographed with a thermal imaging camera to measure the temperature of the secondary battery three times, and the average value was calculated and measured as the surface temperature of the battery during overcharging. Moreover, the weight of each of the secondary batteries prepared in Examples and Comparative Examples was measured.

The measured results were shown in Table 1 below.

**[Table 1]**

| | Temperature (°C) |
|---|---|
| Example 1 | 41±1°C |
| Example 2 | 40±1°C |
| Example 3 | 36±1°C |
| Comparative Example 1 | 52±1°C |
| Comparative Example 2 | 44±1°C |

As shown in Table 1, it can be seen that the secondary battery according to the present invention can minimize heat generation during charging and discharging.

Specifically, referring to Table 1, it can be seen that the measured temperature values of the lithium secondary batteries prepared in Examples 1 to 3 were lower than those of Comparative Examples 1 and 2. In particular, in the case of Example 3 in which a heat dissipation fin configuration was added, it can be confirmed that the internal temperature of the lithium secondary battery was effectively lowered. Referring to the results of Comparative Example 1, it can be predicted that the heat dissipation member did not function properly, thereby being unable to effectively absorb heat generated inside and release it to the outside. Referring to the results of Comparative Example 2, it can be predicted that the applied heat dissipation member did not effectively absorb heat generated from the entire electrode assembly.

In the above, the present invention has been described in more detail through diagrams and exemplary embodiments. However, the diagrams described in the present specification or the configurations described in the exemplary embodiments and the like are only one embodiment of the present invention and do not represent all of the technical spirit of the present invention, so it should be understood that there may be various equivalents and modifications that can replace them at the time of this application.

### [Reference Numerals]

10: (CONVENTIONAL) ELECTRODE ASSEMBLY
11: (CONVENTIONAL) ELECTRODE TAB
20: (CONVENTIONAL) INSULATING FILM
30: (CONVENTIONAL) ELECTRODE LEAD
40: (CONVENTIONAL) BATTERY CASE
41: (CONVENTIONAL) UPPER BATTERY CASE
42: (CONVENTIONAL) LOWER BATTERY CASE
100: ELECTRODE ASSEMBLY
110: UNIT CELL
111a: POSITIVE ELECTRODE PLATE
111a1: POSITIVE ELECTRODE CURRENT COLLECTOR
111a2: POSITIVE ELECTRODE MIXTURE
111a3: POSITIVE ELECTRODE TAB
111b: NEGATIVE ELECTRODE PLATE
111b1: NEGATIVE ELECTRODE CURRENT COLLECTOR
111b2: NEGATIVE ELECTRODE MIXTURE
111b3: NEGATIVE ELECTRODE TAB
112, 120: SEPARATOR
130: HEAT DISSIPATION MEMBER
131: HEAT DISSIPATION TAB
132: HEAT DISSIPATION FIN
210: UPPER BATTERY CASE
220: LOWER BATTERY CASE
300: ELECTRODE LEAD
Ac': (CONVENTIONAL) ACCOMMODATING PART
Ed': (CONVENTIONAL) EDGE PART
E1: FIRST ELECTRODE PART
E2: SECOND ELECTRODE PART
Ra: HEAT DISSIPATION PART
Ac: ACCOMMODATING PART
Jo: JOINING PART

## Claims

1. A lithium secondary battery with ignition suppression structure comprising:
an electrode assembly composed of a first electrode part comprising a unit cell, a second electrode part comprising a unit cell, and a heat dissipation part comprising a heat dissipation member; and
a battery case composed of an upper battery case and a lower battery case, and comprising an accommodating part accommodating the electrode assembly and a joining part formed by extending along an edge of the accommodating part; wherein
the heat dissipation part is interposed between the first electrode part and the second electrode part.

2. The lithium secondary battery with ignition suppression structure of claim 1, wherein
the first electrode part and the second electrode part each comprise at least one or more unit cells.

3. The lithium secondary battery with ignition suppression structure of claim 2, wherein
the number of unit cells included in the first electrode part and the second electrode part is equal to each other.

4. The lithium secondary battery with ignition suppression structure of claim 1, wherein
a separator is interposed between the heat dissipation part and the first electrode part and between the heat dissipation part and the second electrode part.

5. The lithium secondary battery with ignition suppression structure of claim 1, wherein
the heat dissipation part comprises a plurality of heat dissipation members, and a separator is interposed between each of the heat dissipation members.

6. The lithium secondary battery with ignition suppression structure of claim 1, wherein
the heat dissipation member comprises at least one among copper, aluminum, nickel, copper alloy, nickel alloy, titanium, stainless steel (SUS), and carbon.

7. The lithium secondary battery with ignition suppression structure of claim 1, wherein
the unit cell comprises: a positive electrode plate comprising a positive electrode current collector, a positive electrode tab drawn out from one end of the positive electrode current collector, and a positive electrode mixture coated on a surface of the positive electrode current collector;
a negative electrode plate comprising a negative electrode current collector, a negative electrode tab drawn out from one end of the negative electrode current collector, and a negative electrode mixture coated on a surface of the negative electrode current collector; and
a separator interposed between the positive electrode plate and the negative electrode plate.

8. The lithium secondary battery with ignition suppression structure of claim 7, wherein the heat dissipation member has a plate shape, and
the horizontal and vertical length of the heat dissipation member does not exceed the horizontal and vertical length of the positive electrode current collector or the negative electrode current collector.

9. The lithium secondary battery with ignition suppression structure of claim 7, wherein
the heat dissipation member further comprises a heat dissipation tab drawn out at a position corresponding to any one among the positive electrode tab and the negative electrode tab.

10. The lithium secondary battery with ignition suppression structure of claim 7, wherein
the total thickness of the heat dissipation members included in the heat dissipation part is thicker than the thickness of the positive electrode current collector or the negative electrode current collector.

11. The lithium secondary battery with ignition suppression structure of claim 7, wherein
the total thickness of the heat dissipation members included in the heat dissipation part is less than or equal to 8 times the thickness of the positive electrode current collector.

12. The lithium secondary battery with ignition suppression structure of claim 9, wherein
the positive electrode tab is connected to a heat dissipation tab in a position corresponding to the positive electrode tab, and
the negative electrode tab is connected to a heat dissipation tab in a position corresponding to the negative electrode tab.

13. The lithium secondary battery with ignition suppression structure of claim 7, wherein
the heat dissipation member further comprises a heat dissipation fin drawn out from one end where the positive electrode tab and the negative electrode tab are not positioned.

14. The lithium secondary battery with ignition suppression structure of claim 13, wherein
the heat dissipation fin does not exceed the joining part of the battery case, and is interposed between the joining parts of the upper battery case and the lower battery case.
